(19) Europäisches Patentamt
European Patent Office
Office européen des brevets

(11) Publication number: **0 436 775 A2**

(12) **EUROPEAN PATENT APPLICATION**

(21) Application number: **90113360.3**

(51) Int. Cl.5: **C08F 4/06**, C08F 2/38

(22) Date of filing: **12.07.90**

(30) Priority: **29.12.89 CS 7598/89**
**28.12.89 CS 7522/89**

(43) Date of publication of application:
**17.07.91 Bulletin 91/29**

(84) Designated Contracting States:
**DE FR GB NL**

(71) Applicant: **Ceskoslovenska akademie ved**
**Narodni trida 3**
**Praha 1(CS)**

(72) Inventor: **Lukas, Rudolf**
**Doubravinova 1**
**Praha(CS)**
Inventor: **Toman, Ludek**
**Pod Vilami 11**
**Praha(CS)**
Inventor: **Mrazek, Zdenek**
**Premyslovska 25**
**Praha(CS)**
Inventor: **Pradova, Olga**
**Tuniska 633**
**Praha(CS)**
Inventor: **Pacovsky, Vladimir**
**Cerveny Ujezd 157**
**Unhost(CS)**
Inventor: **Kubanek, Vladimir Prof.**
**Gromovové 66**
**Praha(CS)**
Inventor: **Dolezal, Vladimir**
**Srobarova 21**
**Praha(CS)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

(54) **New Polymers and copolymers and method and initiation system for their preparation.**

(57) The invention relates to polymers and copolymers on the basis of cationically polymerizable monomers; which may be obtained by the following method with a new initiation system:
(co)polymerization of one or more cationically polymerizable monomers in the presence of an initiation system comprising

(A1) a polymer, an oligomer and/or a low-molecular weight alkyl halide, comprising at least 5 carbon atoms and at least one chlorine atom bond to a secondary carbon atom,

and/or

(A2) a polymer, an oligomer and/or a low-molecular weight alkyl halide, comprising at least 4 carbon atoms and at least one halogenatom bond to a tertiary carbon atom,

and

(B) $SnCl_4$, eventually in admixture with $FeCl_3$ and/or $BCl_3$, at a molar ratio of the Lewis acid(s) to the monomer(s) of $10^{-5}$ to 50, at -100 to +20 °C, optionally in a polar halogenated solvent. Suitable monomers are isobutene, 1-butene, isoprene, 1,3-butadiene, 2,3-dimethyl-1,3-butadiene, styrene, α-methylstyrene, 1,3-pentadiene and chloroprene.

## NEW POLYMERS AND COPOLYMERS AND METHOD AND INITIATION SYSTEM FOR THEIR PREPARATION

The invention pertains to new polymers, copolymers and graft copolymers, a new initiation system, and a method. for their preparation which employs this new initiation system.

Tin tetrachloride ($SnCl_4$) is a Lewis acid, and accordingly needs the presence of a protogenic compound in order to be able to initiate the polymerization of isobutene, a typical monomer for cationic polymerization. In contrast to other Lewis acids, e.g., boron trifluoride ($BF_3$) and titanium tetrachloride ($TiCl_4$), the polymerization of isobutene proceeds in the presence of tin tetrachloride only in a polar solvent, e.g., in a mixture of monomer and dichloromethane ($CH_2Cl_2$) or methyl chloride ($CH_3Cl$). The initiation does not occur in a non-polar medium, for example, if the polymerization is conducted in bulk.

The non-reactivity of the system $SnCl_4$ - isobutene in a non-polar medium was already described (R.W.G. Norrish, K.E. Russel, in Cation Polymerization and Related Processes, P.H. Plesh, Ed., Heffer and Sons, Cambridge (1953), p. 114; R.H. Biddulph and P.H. Plesh, J. Chem. Soc., 3913 (1960); P.H. Plesh in the Chemistry of Cationic Polymerization, P.H. Plesh, Ed., Pergamon Press, Oxford (1963), p. 175; L. Toman, J. Pilar, M. Marek, J. Polym. Sci., Polym. Chem. Ed., 16, 371 (1978)).

The invention is based on the finding that the polymerization of isobutene is initiated e.g. in a bulk system $SnCl_4$ - isobutene, by a powdery vinyl chloride propene copolymer (referred to as VC/P copolymer), or a powdery vinyl chloride 2-chloroprene copolymer (referred to as VC/2-CP copolymer) or poly(vinyl chloride) (PVC), and the polymers used as initiators are grafted with isobutene. For example, after mixing of powdery PVC or PVC, which was obtained from a benzene or acetone extract of commercial poly(vinyl chloride) (referred to as PVC-BE and PVC-AE, respectively), or a VC/P copolymer with isobutene and tin tetrachloride, the growth of polyisobutylene is perceptible already after 40 min at about -80 °C, whereas the liquid phase (monomer) remains clear, and its viscosity does not increase.

The grafting of PVC or VC/P or VC/2-CP copolymers also proceeds in $SnCl_4$ - isobutene - $CH_2Cl_2$ mixtures with a high concentration of the monomer, e.g., 9 mol/l (i.e. in a weakly polar medium), where the protonic initiation also does not occur (e.g., with residual water in the system), however, in contrast to the grafting in bulk, the reaction in the presence of $CH_2Cl_2$ is faster. The comparison of reactivity in the system $SnCl_4$ - isobutene - bulk or $SnCl_4$ - isobutene - $CH_2Cl_2$ with a high monomer concentration (9 mol/l) with the initiation system containing commercial PVC, PVC-AE or PVC-BE, or VC/P or VC/2-CP copolymers is given in the table listed below.

The found initiation capacity of commercial PVC, PVC-AE and PVC-BE, and VC/P or VC/2-CP copolymers to start the polymerization of isobutene in bulk in the presence of tin tetrachloride is advantageously used for the fast grafting of these polymers in a polar medium (i.e. at monomer concentration < 9 mol/l). The same applies also for other cationically polymerizable monomers, such 1-butene, isoprene, 1,3-butadiene, 2,3-dimethyl-1,3-butadiene, styrene, α-methylstyrene, 1,3-pentadiene and chloroprene, and their mixtures, e.g. mixtures of isobutene with styrene, α-methylstyrene, isoprene, 1,3-butadiene, 2,3-dimethyl-1,3-butadiene, 1,3-pentadiene and/or chloroprene.

The grafting of PVC with cationically polymerizable monomers in the presence of other Lewis acids has the following disadvantages: According to a known method, grafting is carried out in nitrobenzene at room temperature using aluminum trichloride ($AlCl^3$) or titanium tetrachloride ($TiCl_4$) (P.H. Plesh, GB-A-817 684). However, in this case, in the presence of these strong Lewis acids, dehydrogenation of PVC occurs, and, as a consequence of the high sensitivity of aluminum trichloride and titanium tetrachloride to protogenic compounds, a fast formation of homopolymers preferably proceeds by protogenic initiation (e.g.:

$$HCl + MeX_n \longrightarrow H^+MeX_nCl^- \xrightarrow{M} H\text{-}M^+,$$

where M is a cationically polymerizable monomer, and $MeX_n$ is aluminum trichloride or titanium tetrachloride). The low grafting efficiency of this system was already stated by Kennedy (J.P. Kennedy, Cationic Graft Copolymerization, J. Appl. Polym. Sci., Appl. Polym. Symp. 30, Akron (1977)).

A fast termination occurs in the grafting in the presence of alkylaluminum compounds, e.g., $Et_2AlCl$, $Et_3Al$ (J.P. Kennedy, J. Appl. Polym. Sci., Appl. Polym. Symp., No 30 (1977), A. Vidal, J.B. Donnet, J.P. Kennedy, J. Polym. Sci., Polym. Lett. Ed., 15, 587 (1977); B. Iván, J.P. Kennedy, T. Kelen, F. Tüdös, J. Macromol. Sci. - Chem., A16, 1473 (1981)), for example, in the grafting of PVC with isobutene, leading to alkylation or hydrogenation of the ends of the polymer chains, and in the disadvantageous formation of the graft which is no longer reactive (J.P. Kennedy, Cationic Polymerization of Olefins; A critical Inventory, John Wiley and Sons, A Wiley-Interscience Publications, New York (1975), p. 245; J.P. Kennedy and Maréchal,

Carbocationic Polymerization, John Wiley and Sons, A Wiley-Interscience Publication, New York (1982), p. 221-223).

Further possible co-initiators, which contain silver in the molecule, e.g., silver hexafluoroantimonate ($AgSbF_6$) (E. Franta, F. Afshar-Taromi, P. Rempp, Makromol. Chem., 177, 2191 (1976)), are rather expensive, and therefore did not find use in the industrial grafting of PVC.

The system boron trichloride - poly(vinyl chloride) - isobutene has been considered non-reactive for a long time. This is why the partial dehydrochlorination of poly(vinyl chloride) was conducted with sodium hydroxide, which substantially increased the content of reactive allyl-bond chlorine in the chains and had a favourable effect on the course of grafting of PVC (S.N. Gupta, J.P. Kennedy, Polym. Bull., 1, 253 (1979)). However, the dehydrochlorination is disadvantageous because it includes dissolution of the polymer in an organic solvent, reaction with a base, thorough washing to neutral reaction, and thorough drying. Conditions under which grafting of laboratory made or commercially available PVC with isobutene proceeds in the presence of boron trichloride were discovered only recently (CS-A-4590-88 and CS-A-5851-88).

It is the object of the present invention to provide polymers, copolymers and graft copolymers on the basis of cationically polymerizable monomers and a method and initiation systems for their preparation.

The above object is achieved according to the claims. The dependent claims relate to preferred embodiments.

The polymers, copolymers and graft copolymers of the present invention may be obtained by

- (co)polymerization of one or more cationically polymerizable monomers
  in the presence of an initiation system comprising two components,
  (A) the first component being
    (A1) a polymer, an oligomer and/or a low-molecular weight alkyl halide, comprising at least 5 carbonatoms and at least one chlorine atom bond to a secondary carbon atom in the molecular chain,
    and/or
    (A2) a polymer, an oligomer and/or a low-molecular weight alkyl halide, comprising at least 4 carbon atoms and at least one halogenatom bond to a tertiary carbon atom in the molecule;
  and
  (B) the second component being tin tetrachloride, eventually in admixture with iron trichloride and/or boron trichloride,
- at a molar ratio of the Lewis acid(s) to the monomer(s) of $10^{-5}$ to 50,
  preferably at a (co)polymerization temperature of -100 to +20 °C, and optionally in a reaction medium of one or more polar halogenated solvents, eventually in admixture with one or more non-polar or aromatic solvents.

The above-defined method leads to products containing the chemically bond initiation components A1 and/or A2.

The method according to the invention may be carried out by dosing continuously and/or discontinuously the monomer or a mixture of monomers into the initiation system (initiator component(s) + Lewis acid(s) prepared beforehand or by adding tin tetrachloride to the mixture of monomer and initiators as the last component.

According to the invention, the polymerization can be conducted either without an auxiliary solvent or in a medium of polar halogenated solvents or monomers, e.g., methyl chloride, dichlormethane, ethyl chloride, or vinyl chloride, vinyl chloride/vinylidene chloride, or their mixtures with non-polar solvents, e.g., benzene or toluene.

Suitable initiator components are e.g. all low-molecular weight alkyl halides, and oligomeric or polymeric compounds, containing at least one chlorine atom bond to a secondary carbon atom and comprising five or more carbon atoms, and low-molecular weight alkyl halides and oligomers or polymers containing four or more carbon atoms in the molecule and at least one halogen atom bond to a tertiary carbon atom, e.g., 2,4-dichloropentane, 2,4,6-trichloroheptane, chlorinated paraffins, chlorinated cyclic hydrocarbons, chlorinated olefins and polyolefins, PVC, chlorinated PVC, copolymers of vinyl chloride with $\alpha$-olefins, above all with propene or vinylidene chloride, and t-butyl chloride, 2-chloro-2,4,4-trimethylpentane, telechelic polyisobutenes with terminal $-C(CH_3)_2Cl$ groups, copolymers of vinyl chloride with 2-chloropropene, hydrochlorinated butyl rubber, hydrobrominated butyl rubber and chlorinated polypropylene.

Cationically polymerizable monomers which can be advantageously used are e.g. isobutene, 1-butene, styrene, $\alpha$-methylstyrene, isoprene, 1,3-butadiene, 2,3-dimethyl-1,3-butadiene, 1,3-pentadiene and chloroprene and their mixtures, e.g., isobutylene/isoprene, styrene/ $\alpha$-methylstyrene and isobutene/1,3-butadiene.

An advantage of the method according to the invention consists in that the (co)polymerization yields

functionalized products. The head of the polymeric chains corresponds to the used polymeric initiator component, e.g., PVC, VC/2-CP or VC/P, in contrast to the protonically initiated reaction (e.g., using the system $H_2O$/Lewis acid).

A further advantage of the method according to the invention consists in that polyisobutene oligomers with a very narrow molecular weight distribution may be obtained.

Furthermore, the use of tin tetrachloride is more advantageous in comparison with other initiation systems, e.g., boron trichloride - PVC, (CS-A-4590-88 and CS-A-5851-88), because tin tetrachloride is less expensive and better available, and the liquid tin tetrachloride can be easier handled with a simpler equipment and thus is also more suitable for industrial application than to gaseous boron trichloride.

The polymers and copolymers of the present invention may be advantageously used as reactive polymers or as polymeric specialities and compatibilizers in incompatible mixtures of polymers, e.g. PVC-g-polyisobutene, PVC-g-polystyrene, VC/P copolymers-g-poly-α-methylstyrene, VC/P copolymer-g-polyisobutylene, etc.

Accordingly, the method of the present invention allows to prepare a large number of polymers and graft copolymers having specific properties for particular applications.

In the following, the method for the production of polymers, copolymers or graft copolymers according to the invention is illustrated by means of examples. In all examples, the polymerizations were carried out in glass ampoules with a volume of 30 ml provided with an injection septum seal, or in a glass reactor with a volume of 150 ml equipped with a stirrer. The same techniques and drying of chemicals were used as described in CS-A-1210-89. The molecular weights were determined by gel permeation chromatography in solution in tetrahydrofuran (THF). A simple comparison of molecular weights of copolymers was done by means of polystyrene standards. The molecular weights were determined from the maxima of GPC curves and are only apparent and related to polystyrene.

**Example 1**

A commercially available powdery poly(vinyl chloride) (Neralit S682) (further referred to as PVC) with molecular weight averages $\overline{M}_w \sim 170{,}000$ and $\overline{M}_n \sim 60{,}000$ was mixed with isobutene and tin tetrachloride ($SnCl_4$) at -78 °C. After mixing, the concentrations in batch were as follows: Isobutene 10.9 mol/l; PVC 68 g/l; $SnCl_4$ 0.3 mol/l. Polyisobutene (further referred to as PIB) began to grow on PVC particles after 40 min, whereas the liquid phase (monomer) remained clear even after 3 h when the reaction was stopped by addition of methanol at a yield of 6.8 g PIB (conversion 1.1 %). The composition of the graft copolymer PVC-g-PIB corresponded to the weight ratio PVC/PIB ~ 10. The amount of chlorine in the product ( ~ 46 wt.-%) is in a good agreement with this ratio. The results are given in the following table. The polymerization of isobutene did not occur in the absence of PVC even after 48 h.

Reactivity of isobutene in the presence of $SnCl_4$ in a non-polar medium, i.e. in bulk or isobutene-dichloromethane mixtures with high monomer concentration, and in the presence of various initiators at -78 °C

| Initiator | Initiator concentration (g/l) | $SnCl_4$ concentration ($mol/l \cdot 10^2$) | Isobutene concentration (mol/l) | Time (h) | Conversion PIB(%) |
|---|---|---|---|---|---|
| $H_2O$ * | | 30 | bulk | 48 | 0 |
| $H_2O$ * | | 30 | 9 | 4 | 0 |
| $H_2O$ * | | 8.4 | 7.2 | 2 | 0.3 |
| PVC | 68 | 30 | bulk | 3 | 1.1 |
| VC/P** | 60 | 30 | bulk | 2 | 4.9 |
| PVC-AE | 68 | 30 | bulk | 24 | 23.0 |
| PVC-BE | 68 | 30 | bulk | 24 | 25.0 |
| PVC | 50 | 8.4 | 9 | 2 | 6.0 |
| VC/2-CP | 1 | 8.4 | 8.9 | 2 | 1.5 |
| VC/2-CP | 2.5 | 8.4 | 8.9 | 2 | 6.1 |
| VC/2-CP | 5.0 | 8.4 | 8.9 | 2 | 7.6 |
| VC/2-CP | 7.5 | 8.4 | 8.9 | 2 | 16.0 |
| VC/2-CP | 7.5 | 8.4 | 7.2 | 2 | 31.0 |

* Residual water in the system

** VC/P containing about 3 mol.-% of propene monomer units in the chain

## Example 2

A powdery vinyl chloride/propene copolymer (further referred to as copolymer VC/P) with a molecular weight $\overline{M}_n$ ~ 35,000, containing ~ 14 mol.-% of propene monomer units in the chain, was mixed with isobutene and tin tetrachloride ($SnCl_4$) at -78 °C. The concentrations after mixing were as follows: Isobutene 10.9 mol/l; copolymer VC/P 68 g/l; $SnCl_4$ 0.3 mol/l. PIB began to grow on the particles of VC/P after 30 min, whereas the liquid phase remained clear. The reaction was stopped after 3 h by addition of methanol at a yield of PIB of 13.6 g. The composition of the VC/P-g-PIB copolymer corresponded to the weight ratio VC-P/PIB = 5. The amount of chlorine in the product ( ~ 40 wt.-%) is in a good agreement with

this ratio. The results are given in the table.

**Example 3**

A powdery copolymer VC/P with a molecular weight $\overline{M}_n$ ~ 70,000, containing about 3 mol.-% of propene monomer units in the chain, was mixed with isobutene, tin tetrachloride ($SnCl_4$) and dichloromethane at -78 °C. The concentrations after mixing were as follows: Isobutene 9.0 mol/l; copolymer VC/P 60 g/l; $SnCl_4$ 0.3 mol/l. PIB began to grow on the copolymer particles after 20 min, whereas the liquid phase remained clear. The reaction was stopped by addition of methanol after 2 h at a yield of PIB of 25 g (conversion 4.9 %). The composition of the copolymer VC/P-g-PIB corresponds to the weight ratio VC-P/ PIB = 2.4 in good agreement with the amount of chlorine found in the product ( ~ 38 wt.-%).

**Example 4**

The copolymer VC/P, as in example 2, was used for grafting with isobutene or 1-butene with the exception that it was first dissolved in dichloromethane. The solution of Copolymer VC/P was added to a mixture of isobutene or 1-butene and $SnCl_4$ at -78 °C. The concentrations after mixing were as follows: Isobutene, 1-butene 7 mol/1; $SnCl_4$ 0.2 mol/l; copolymer VC/P 41 g/l. The polymerization was stopped after 2 h by addition of methanol at a conversion of about 100 % and 18 %, respectively. The resulting rubbery products swelling in heptane had a molecular weight M > 350,000 and 300,000, respectively. GPC analysis proved the grafting of copolymer VC/P with isobutene and 1-butene.

**Example 5**

The grafting of copolymer VC/P with isobutene was carried out at -78 °C as in example 4, with the exception that a mixture of tin tetrachloride and boron trichloride in a molar ratio $SnCl_4/BCl_3$ = 1 was used as coinitiator (B). The concentrations in batch after mixing of the reaction components were as follows: Isobutene 6 mol/l; $SnCl_4$ + $BCl_3$ 0.18 mol/l; copolymer VC/P 41 g/l. The polymerization was stopped after 2 h by addition of methanol at a conversion of about 100 %. The product had a molecular weight M > 350,000 and swelled in heptane. GPC analysis proved grafting of the copolymer VC/P with isobutene.

**Example 6**

PVC was stirred in dichlormethane with tin tetrachloride ($SnCl_4$) for 24 h at 25 °C. The resulting mixture was added to isobutene at -78 °C. The concentrations of the components in the polymerization batch after mixing with the monomer were as follows: Isobutene 4.8 mol/l; $SnCl_4$ 0.18 mol/l; PVC 31 g/l. The reaction was stopped after 50 min by addition of methanol at a conversion of about 70 %. GPC analysis of product, i.e. the graft copolymer PVC-g-PIB with a weight ratio PIB/PVC/ ~ 6, is shown in Figure 1, where the GPC record (elution diagram) is compared with that of the starting PVC.

**Example 7**

Copolymerizations of isobutene with 1,3-butadiene or 2,3-dimethyl-1,3-butadiene initiated with PVC were conducted in dichloromethane or in a 1:1 mixture (v/v) of dichloromethane and ethyl chloride. PVC was first stirred for 24 h at 25 °C in the chlorinated solvent and, one hour before use, tin tetrachloride was added to this mixture at 0 °C. The mixture was then mixed with the monomers at about -78 °C. After mixing of the reaction components the concentrations of the components in the batch were as follows: Isobutene 5.8 mol/l; diene monomer 0.5 mol/l; PVC 21 g/l; $SnCl_4$ 0.2 mol/l. The copolymerizations were stopped by addition of methanol after 1 h at a conversion of about 40 %. The synthesis gave rubbery products with a molecular weight M ~ 350,000, and an unsaturation of ~ 1.3 mol.-%.

**Example 8**

Copolymerizations of isobutene with isoprene or chloroprene were carried out as in example 7. After dosing of an initiation system (PVC - $SnCl_4$ in chlorinated solvent) into a mixture of monomers, the concentrations of the components in the polymerization batch were as follows: Isobutene 5.0 mol/l; diene monomer 0.15 mol/l; tin tetrachloride 0.18 mol/l; PVC 30 g/l. The copolymerizations were stopped by addition of methanol after 1.5 h at a conversion of about 45 %. The resulting rubbery products had a

molecular weight M ~ 350,000; and an unsaturation of ~ 1.3 mol.-%. The copolymers were swellable in heptane.

**Example 9**

The polymerization of isobutene with 1,3-pentadiene was carried out as in example 7. After mixing of the reaction components, the concentrations of the components in the mixture were as follows: Isobutene 5.8 mol/l; diene monomer 0.5 mol/l; $SnCl_4$ 0.2 mol/l; PVC 31 g/l. The reaction was stopped after 1.5 h by addition of methanol at a conversion of about 40 %. The product had a molecular weight M ~ 350,000, and an unsaturation of ~ 1.2 mol.-%, and was swellable in heptane.

**Example 10**

An initiation system consisting of PVC and $SnCl_4$ in ethyl chloride was dosed at about -70 °C into a mixture of isobutene and vinyl chloride (2:1 v/v). The mixture PVC - $SnCl_4$ in ethyl chloride was stirred before use for 6 h at 0 °C. After mixing of the reaction components, the concentrations in the polymerization batch were as follows: Isobutene 5.0 mol/l, $SnCl_4$ 0.18 mol/l; PVC 31 g/l. The reaction was stopped by addition of methanol after 1.5 h at a conversion of ~ 100 %. The product with a molecular weight M > 350 000 was swellable in heptane.

**Example 11**

The polymerization of isobutene was carried out as in example 10. Besides the other components, powdery ferric chloride was present in the reaction mixture in a concentration of 0.1 mol/l, which was added to the monomer before addition of the PVC - $SnCl_4$ mixture in ethyl chloride. The reaction was stopped after 1,5 h by addition of methanol at a conversion of about 100 %. The product with a molecular weight M > 350,000 was swellable in heptane.

**Example 12**

PVC or copolymer VC/P (containing 3 mol.-% of propene monomer units in the chain) was stirred in dichloromethane for 24 h at 25 °C. Then tin tetrachloride was added. The concentrations of the components in the resulting initiation system were as follows: PVC 6 g/l and $SnCl_4$ 0.18 mol/l, or copolymer VC/P 12 g/l and $SnCl_4$ 0.12 mol/] The mixture was cooled down to about -70 °C. Styrene or α-methylstyrene was continuously added to these systems with stirring at a rate of $1.8 \cdot 10^{-2}$ mol/min. The addition was stopped after 1 h at a conversion of > 90 %. GPC analysis proved, by comparison of a refractometric record (RI) and a record in the UV region (at 254 nm) the formation of products PVC-g-poly-α-methylstyrene or copolymer VC/P-g-poly-α-methylstyrene or VC/P-g-polystyrene, respectively.

**Example 13**

Grafting with isobutene was carried out at -78 °C. Copolymer VC/2-CP, containing about 5 mol.-% of 2-chloroprene monomer units in the polymer chain ($\overline{M}_n$ = 42,000) was used as a polymeric initiator of R-Cl[t] type (A2). The initiator was dissolved in dichloromethane and added to a isobutene - $SnCl_4$ mixture at -78 °C. The concentrations after mixing of the reaction components were as follows: Isobutene 8.9 mol/l or 7.2 mol/l; $SnCl_4$ $8.4 \cdot 10^{-2}$ mol/l; VC/2-CP 1.0 g/l, 2.5 g/l, 5.0 g/l, or 7.5 g/l. The reactions were stopped after 2 h by addition of 5 ml methanol. The results are shown in the above table. The grafting was clearly proved by comparison of the molecular weight distributions (dw/d(log M)) of the initial copolymer VC/2-CP ($\overline{M}_n$ = 42,400; $\overline{M}_w$ = 80,700; $\overline{M}_w/\overline{M}_n$ = 1.9) and of the resulting graft copolymer VC/2-CP-g-PIB ($\overline{M}_n$ = 664,000; $\overline{M}_w$ = 1,285,000; $M_w/M_n$ = 1.9) as shown in Figure 2.

**Example 14**

Grafting with isobutene was carried out in dichloromethane by using the same initiation system as in example 13. The concentrations after mixing of the reaction components with the monomer at -20 °C were as follows: Isobutene 6.2 mol/l; $SnCl_4$ $8.0 \cdot 10^{-2}$ mol/l; VC/2-CP 8.0 g/l. After 3 min of stirring at -20 °C, the reaction mixture was cooled down to about -75 °C and kept at this temperature for 10 h. The reaction was then stopped by addition of 10 ml of methanol at a conversion of 100 %, based on isobutene. The product

had a molecular weight $\overline{M}_n > 5 \cdot 10^5$, was partially soluble in hexane and contained swollen gels.

**Example 15**

Polymerizations of isobutene were carried out at -20 °C in dichloromethane in the presence of t-BuCl. $SnCl_4$ was dosed into the mixture as the last component. The concentrations after mixing of the reaction components were as follows: Isobutene 5.0 mol/l; $SnCl_4$ 4.3 $\cdot$ $10^{-2}$ mol/l; t-BuCl 0.17 mol/l, 0.34 mol/l, 0.66 mol/l, and 0.90 mol/l, respectively. The syntheses were compared with the polymerization of isobutene under the same experimental conditions, at the same concentrations of monomer and $SnCl_4$, but in the absence of t-BuCl (protonic initiation is supposed in the polymerization system without t-BuCl). The reactions were stopped after 18 h from the mixing of the components by addition of methanol at a conversion of 100 % attained in all polymerizations. PIB with a molecular weight $\overline{M}_n$ = 20,200 and $\overline{M}_w$ = 63,300 resulted from the syntheses in the absence of t-BuCl. The decrease in $\overline{M}_w$ of PIB found in dependence of the applied concentration of t-BuCl is shown in Figure 3, curve A. The results prove that t-BuCl acts as a chain-transfer agent under the given conditions. Curve B relates to experiments carried out with addition of 2,5-dichloro-2,5-dimethylhexane.

**Example 16**

Oligomerization of isobutene was carried out at -20 °C in dichloromethane with use of an initiation-transfer system consisting of 2,5-dichloro-2,5-dimethylhexane (DDH) and $SnCl_4$. A mixture DDH/$SnCl_4$ - (concentrations: DDH 0.437 mol/l; $SnCl_4$ 0.5 mol/l) was prepared in dichloromethane and kept (activated) at laboratory temperature for 24 h. The mixture was then cooled down to -20 °C and added to a solution of isobutene in dichloromethane. The concentrations after mixing were as follows: Isobutene 5 mol/l; DDH 0,21 mol/l; $SnCl_4$ 0.25 mol/l (concentration of DDH based on the original concentration of used pure compound). The reaction mixture was maintained at -20 °C for 48 h, and then 10 ml of methanol were added; the conversion of isobutene was 100 %. The product was a colourless (white) PIB-oil with a very narrow molecularweight distribution (MWD) and a polydispersity index I = 1.2 (I = $\overline{M}_w/\overline{M}_n$). The low molecular weight of the oil ($\overline{M}_n$ = 318) shows that isobutene was oligomerized to a mixture of pentamers and hexamers. The MWD of PIB-oil was compared with the MWD of PIB, which was prepared at the same temperature, i.e., -20 °C, under the same experimental conditions, but in the absence of DDH. The results obtained are shown in Figure 4 (the effect of $SnCl_4$ in the absence of DDH is presumable due to initiation with residual water in the reaction mixture). PIB with a molecular weight $\overline{M}_n \sim$ 20,000 and a broad MWD (I = 3.1) is formed by protogenic initiation at a conversion of 100 %.

**Example 17**

Oligomerization of isobutene was carried out at -20 °C in dichloromethane using the mixture DDH/$SnCl_4$ prepared beforehand as in example 16. The concentrations of the components were as follows: Isobutene 5 mol/l; DDH 0.13 mol/l; $SnCl_4$ 0.15 mol/l (the concentration of DDH is based on the used pure compound). A colourless PIB oil without odour and with $\overline{M}_n$ = 326 (I = 1.3) was obtained at a conversion of 100 %.

**Example 18**

Oligomerization of isobutene was carried out at -20 °C in dichloromethane as in example 16 using a mixture of 2,5-dibromo-2,5-dimethylhexane (Br-DDH) and $SnCl_4$ prepared beforehand. The concentrations of the components were as follows: Isobutene 4.5 mol/l; Br-DDH 0.18 mol/l; $SnCl_4$ 0.2 mol/l. A PIB-oil with a molecular weight $\overline{M}_n$ = 320 was obtained at a conversion of 100 %.

**Example 19**

A telechelic polyisobutene (PIB-Cl) with $\overline{M}_n$ = 4,100 (8 g), which contained terminal $-CH_2C(CH_3)_2Cl$ groups, was mixed with heptane and dichloromethane (volume ratio 1:1). Into this mixture containing about 30 wt.-% of PIB-Cl, $SnCl_4$ was added at 25 °C to a $SnCl_4$ concentration of 0.2 mol/l in the mixture. The mixture of PIB-Cl and $SnCl_4$ was mixed, cooled down to -40 °C, and then a solution of $\alpha$-methylstyrene ($\alpha$-MeSt) in dichloromethane ($\alpha$-MeSt concentration 2.4 mol/l) was slowly added to the system PIB-Cl/$SnCl_4$ with continuous stirring at a rate of 1 ml/ min. After addition of 6 g $\alpha$-MeSt, the reaction was stopped by

addition of methanol (10 ml) at a conversion of α-MeSt of almost 100 %. GPC analysis of the product showed, by comparison of the refractometric record (RI) with the record detected in the UV region at $\lambda$ = 254 nm, that a block copolymer PIB-b-poly- α-methylstyrene was formed.

**Example 20**

Grafting of polyisoprene rubber and commercial butyl rubber with vinylaromatic monomers and isobutene was carried out as follows:

a) Hydrochlorination of pure natural rubber and commercial butyl rubber, i.e. a copolymer of isobutene with isoprene containing 2.4 mol.-% of isoprene units in the chain, was carried out in benzene solution at 5 °C for 3 and 6 h, respectively. After isolation the products were dried in benzene first over calcium chloride ($CaCl_2$), and then post-dried over molecular sieves.

b) The hydrochlorinated products were used in a dichloromethane/benzene mixture as initiators in combination with $SnCl_4$ or a $SnCl_4/FeCl_3$ mixture at -40 °C. The gradual addition of styrene or α-methylstyrene in a dichloromethane/benzene mixture to the initiation system was conducted as in example 19. Grafting of the aromatic monomer to natural rubber or butyl rubbers was proved by comparison of the detected RI and UV records in GPC of the products.

c) After completion of dosing of α-methylstyrene, the reaction mixture was stirred at -40 °C for 3 h. Isobutene (3 g) was then slowly added to the reaction mixture by condensation. The molecular weight ($\overline{M}_n$) of the product was increased from 300,000 to 360,000.

**Example 21**

Grafting with 1-butene was carried out in a dichloromethane solution using the initiation system copolymer VC/2-CP - $SnCl_4$. The copolymer VC/2-CP was dissolved in dichloromethane to a 10-wt.-% solution and mixed with $SnCl_4$ at -20 °C. This reaction mixture was then added to a solution of 1-butene in dichloromethane at -70 °C. After mixing, the concentrations of the components were as follows: 1-butene 4.0 mol/l; $SnCl_4$ 0.1 mol/l. The reaction was stopped after 5 h by addition of methanol (10 ml). The elemental analysis proved that the product formed under the given reaction conditions contained 5 wt.-% of grafted monomer units of 1 -butene.

**Example 22**

Grafting with butene monomers was carried out in dichloromethane using the copolymer VC/2-CP. This copolymer was dissolved and mixed with $SnCl_4$ in dichloromethane in the way described in example 21. A mixture of copolymer VC/2-CP with $SnCl_4$ in dichloromethane was added at about -70 °c to a mixture containing $C_4$ hydrocarbons ($C_4$-fraction containing ~ 40 wt.-% of isobutene, ~ 20 wt.-% of 1-butene, ~ 10 wt.-% of 2-butene, and ~ 20 wt.-% of isobutane and butane). This mixture of $C_4$ hydrocarbons was mixed before use with dichloromethane in a volume ratio of 1:1. After mixing, the concentration of $SnCl_4$ was 0.1 mol/l, and the content of copolymer VC/2-CP of the reaction mixture was 5 g/l. The reaction was carried out for 5 h at -70 °C and then stopped by addition of methanol (10 ml) at an attained conversion of 250 % based on the used copolymer VC/2-CP).

**Example 23**

Grafting with butene monomers was carried out in dichloromethane by the method described in example 22, with the exception that the mixture of $C_4$ hydrocarbons did not contain isobutene. The reaction was carried out for 24 h at -70 °C and then stopped by the addition of methanol. The conversion attained was 150 %, based on the used copolymer VC/2-(CP.

**Example 24**

A mixture of dichloromethane (8 ml), 2,4-dichloropentane (2 ml) and tin tetrachloride ($SnCl_4$) (0.8 ml) was stirred for 24 h at 25 °C. After this time, the mixture was added as an initiation system into a solution of isobutene in dichloromethane at -78 °C. The concentrations in the batch after mixing were as follows: Isobutene 3.3 mol/l; $SnCl_4$ 0.18 mol/l; 2,4-dichloropentane 0.4 mol/l. The reaction was stopped after 20 min by addition of methanol at an attained conversion of 100 %. The molecular weight of the product was M > 400,000. In the absence of 2,4-dichloro-pentane initiator and at the same concentrations of monomer and

$SnCl_4$ and under the same experimental conditions, only about 10 % conversion was attained after 20 min of reaction (assumed protonic initiation by residual water).

**Example 25**

The polymerization of isobutene was carried out at -78 °C as in example 24, with the exception that 2,4,6-trichloroheptane was used as initiation component. The activation time of initiator with co-initiator was 24 h at 25 °C. The composition of the resulting batch was as follows: Isobutene 3.3 mol/l; $SnCl_4$ 0.16 mol/l; 2,4,6-trichloroheptane 0.3 mol/l. The polymerization was stopped after 20 min by addition of methanol at a conversion of ~ 100 %. The molecular weight of the product was M ~ 400,000.

**Example 26**

A powdery PVC-AE (acetone extract of commercial PVC) with a molecular weight $\overline{M}_n$ ~ 16,230 was mixed in the absence of a polar chlorinated solvent at -78 °C

I) with $SnCl_4$, and, after 20 min, isobutene was added by condensation,

or

II) with the monomer, and $SnCl_4$ was added as the last component.

After mixing the resulting mixtures contained in both cases: Isobutene 11.1 mol/l, PVC-AE 68 g/l; $SnCl_4$ 0.3 mol/l. PIB began to grow on the particles of PVC-AE within 20 min, whereas the liquid phase (monomer) remained clear even after 24 h, when the reaction was stopped by the addition of methanol at an attained conversion of 23 %. The obtained product had a rubbery character, and GPC analysis proved grafting of isobutene on PVC.

**Example 27**

A powdery PVC-BE (benzene extract of commercial PVC) with a molecular weight $\overline{M}_n$ ~16,240 was mixed in the absence of a polar chlorinated solvent at -78 °C

I) with $SnCl_4$, and, after 10 min, isobutene was added by condensation,

or

II) first with the monomer, and $SnCl_4$ was added as the last component.

After mixing the resulting mixtures had the following composition in both cases: Isobutene 11.1 mol/l; PVC-BE 68 g/l; $SnCl_4$ 0.3 mol/l. PIB began to grow on the particles of PVC-BE within 20 min, whereas the liquid phase remained clear, and its viscosity did not increase even after 24 h when the reaction was stopped by the addition of methanol at an attained conversion of 25 %. The resulting product had a rubbery character, and GPC analysis proved grafting of isobutene on PVC.

In the absence of PVC-BE, at the same concentrations of monomer and $SnCl_4$, and under the same experimental conditions, polyisobutene was not found in the reaction mixture after 24 or 48 h. The obtained results are shown in the table.

**Example 28**

A solution of PVC-BE in dichloromethane was added to a non-reacting mixture of isobutene and tin tetrachloride ($SnCl_4$) at -78 °C. After mixing, the concentrations in the batch were as follows:

I) Isobutene 9 mol/l; $SnCl_4$ 0.3 mol/l; PVC-BE 50 g/l;

II) isobutene 7 mol/l; $SnCl_4$ 0.2 mol/l; PVC-BE 40 g/l.

In case I), the polymerization was stopped after 2 h at an attained conversion of 22 %. In the absence of PVC-BE, i.e. after addition of only dichloromethane to the mixture of isobutene with $SnCl_4$, no polymer was found after 2 h. The results are shown in the table.

In II), the polymerization was stopped after 1 h at a conversion of ~ 100 %.

The synthesized products had a rubbery character and a molecular weight M > 300,000, and were swellable in heptane. GPC analysis proved grafting of isobutene on PVC. Figure 5 shows the comparison of the GPC record of the product polymerized in batch II) up to a conversion of 100 %, i.e. of the copolymer PVC-g-PIB (weight composition PIB/PVC = 10) with that of the initiator component PVC-BE.

## Claims

1. Polymers and copolymers on the basis of cationically polymerizable monomers,

obtainable by
- (co)polymerization of one or more cationically polymerizable monomers in the presence of an initiation system comprising two components,
(A) the first component being
(A1) a polymer, an oligomer and/or a low-molecular weight alkyl halide, comprising at least 5 carbon atoms and at least one chlorine atom bond to a secondary carbon atom in the molecular chain,
and/or
(A2) a polymer, an oligomer and/or a low-molecular weight alkyl halide, comprising at least 4 carbon atoms and at least one halogenatom bond to a tertiary carbon atom in the molecule,
and
(B) the second component being tin tetrachloride, eventually in admixture with iron trichloride and/or boron trichloride,
- at a molar ratio of the Lewis acid(s) to the monomer(s) of $10^{-5}$ to 50,

preferably at a (co)polymerization temperature of -100 to +20 °C, and optionally in a reaction medium of one or more polar halogenated solvents, eventually in admixture with one or more non-polar or aromatic solvents.

**2.** The polymers and copolymers according to claim 1, characterized in that the cationically (co)-polymerized monomers are isobutene, 1-butene, isoprene, 1,3-butadiene, 2,3-dimethyl-1,3-butadiene, styrene, $\alpha$-methylstyrene, 1,3-pentadiene and/or chloroprene, preferably the combinations isobutene/isoprene, isobutene/1,3-butadiene and/or styrene/$\alpha$-methylstyrene.

**3.** The polymers and copolymers according to claim 1 or 2, obtainable with use of an initiation system, component A1 of which is selected from 2,4-dichloropentane, 2,4,6-trichloroheptane, poly(vinyl chloride), chlorinated poly(vinyl chloride), chlorinated paraffins, copolymers of vinyl chloride with vinylidene chloride, chlorinated polyolefins, chlorinated $\alpha$-olefins, and chlorinated cyclic hydrocarbons.

**4.** The polymers and copolymers according to one of claims 1 to 3, obtainable with use of an initiation system where the halogen of component A2 is chlorine or bromine, and component A2 is selected from copolymers of vinyl chloride comprising the terminal group $-C(CH_3)_2Cl$, hydrochlorinated polyisoprene, hydrochlorinated or hydrobrominated butyl rubber, chlorinated butyl rubber, chlorinated polypropylene, t-butyl chloride, 2,5-dibromo-2,5-dimethylhexane, and 2,5-dichloro-2,5-dimethylhexane.

**5.** A method for preparing the polymers and copolymers according to one of claims 1 to 4, characterized by
- (co)polymerization of one or more cationically polymerizable monomers in the presence of an initiation system comprising two components,
(A) the first component being
(A1) a polymer, an oligomer and/or a low-molecular weight alkyl halide, comprising at least 5 carbon atoms and at least one chlorine atom bond to a secondary carbon atom in the molecular chain,
and/or
(A2) a polymer, an oligomer and/or a low-molecular weight alkyl halide, comprising at least 4 carbon atoms and at least one halogenatom bond to a tertiary carbon atom in the molecule,
and
(B) the second component being tin tetrachloride, eventually in admixture with iron trichloride and/or boron trichloride,
- at a molar ratio of the Lewis acid(s) to the monomer(s) of $10^{-5}$ to 50,

preferably at a (co)polymerization temperature of -100 to +20 °C, and optionally in a reaction medium of one or more polar halogenated solvents, eventually in admixture with one or more non-polar or aromatic solvents.

**6.** The method according to claim 5, characterized in that the cationically (co)polymerized monomers are isobutene, 1-butene, isoprene, 1,3-butadiene, 2,3-dimethyl-1,3-butadiene, styrene, $\alpha$-methylstyrene, 1,3-pentadiene and/or chloroprene, preferably the combinations isobutene/isoprene, isobutene/1,3-butadiene and/or styrene/$\alpha$-methylstyrene.

7. The method according to claim 5 or 6, characterized by the use of an initiation system, component A1 of which is selected from 2,4-dichloropentane, 2,4,6-trichloroheptane,poly(vinyl chloride), chlorinated poly(vinyl chloride), chlorinated paraffins, copolymers of vinyl chloride with vinylidene chloride, chlorinated polyolefins, chlorinated α-olefins, and chlorinated cyclic hydrocarbons.

8. The method according to one of claims 5 to 7, characterized by the use of an initiation system where the halogen of component A2 is chlorine or bromine, and component A2 is selected from copolymers of vinyl chloride comprising the terminal group $-C(CH_3)_2Cl$, hydrochlorinated polyisoprene, hydrochlorinated or hydrobrominated butyl rubber, chlorinated butyl rubber, chlorinated polypropylene, t-butyl chloride, 2,5-dibromo-2,5-dimethylhexane, and 2,5-dichloro-2,5-dimethylhexane.

9. The method according to one of claims 5 to 8, characterized in that the monomer or monomer mixture is discontinuously and/or continuously dosed into the initiation system prepared beforehand, or the initiation system is mixed with the monomer or monomer mixture, or component B of the initiation system or tin tetrachloride is added as the last component to a mixture of component A of the initiation system and the monomer or monomer mixture, which eventually comprises iron trichloride and/or boron trichloride.

10. The method according to one of claims 5 to 9, characterized in that the polar halogenated solvents are selected from methyl chloride, dichloromethane, ethyl chloride, vinyl chloride and their mixtures, and/or the non-polar or aromatic solvent are selected from heptane, carbon tetrachloride, cyclohexane, benzene and toluene and their mixtures.

11. Initiation system for the cationic polymerization and graft copolymerization of cationically polymerizable monomers, particularly for carrying out the method according to one of claims 5 to 10, comprising two components,
(A) the first component being
(A1) a polymer, an oligomer and/or a low-molecular weight alkyl halide, comprising at least 5 carbon atoms and at least one chlorine atom bond to a secondary carbon atom in the molecular chain,
and/or
(A2) a polymer, an oligomer and/or a low-molecular weight alkyl halide, comprising at least 4 carbon atoms and at least one halogenatom bond to a tertiary carbon atom in the molecule,
and
(B) the second component being tin tetrachloride, eventually in admixture with iron trichloride and/or boron trichloride.

12. The initiation system according to claim 11, characterized in that
- component A1 is selected from 2,4-dichloropentane, 2,4,6-trichloroheptane, poly(vinyl chloride), chlorinated poly(vinyl chloride), chlorinated paraffins, copolymers of vinyl chloride with vinylidene chloride, chlorinated polyolefins, chlorinated α-olefins, and chlorinated cyclic hydrocarbons, and/or
- the halogen of component A2 is chlorine or bromine, and component A2 is selected from copolymers of vinyl chloride comprising the terminal group $-C(CH_3)_2Cl$, hydrochlorinated polyisoprene, hydrochlorinated or hydrobrominated butyl rubber, chlorinated butyl rubber, chlorinated polypropylene, t-butyl chloride, 2,5-dibromo-2,5-dimethylhexane, and 2,5-dichloro-2,5-dimethylhexane.

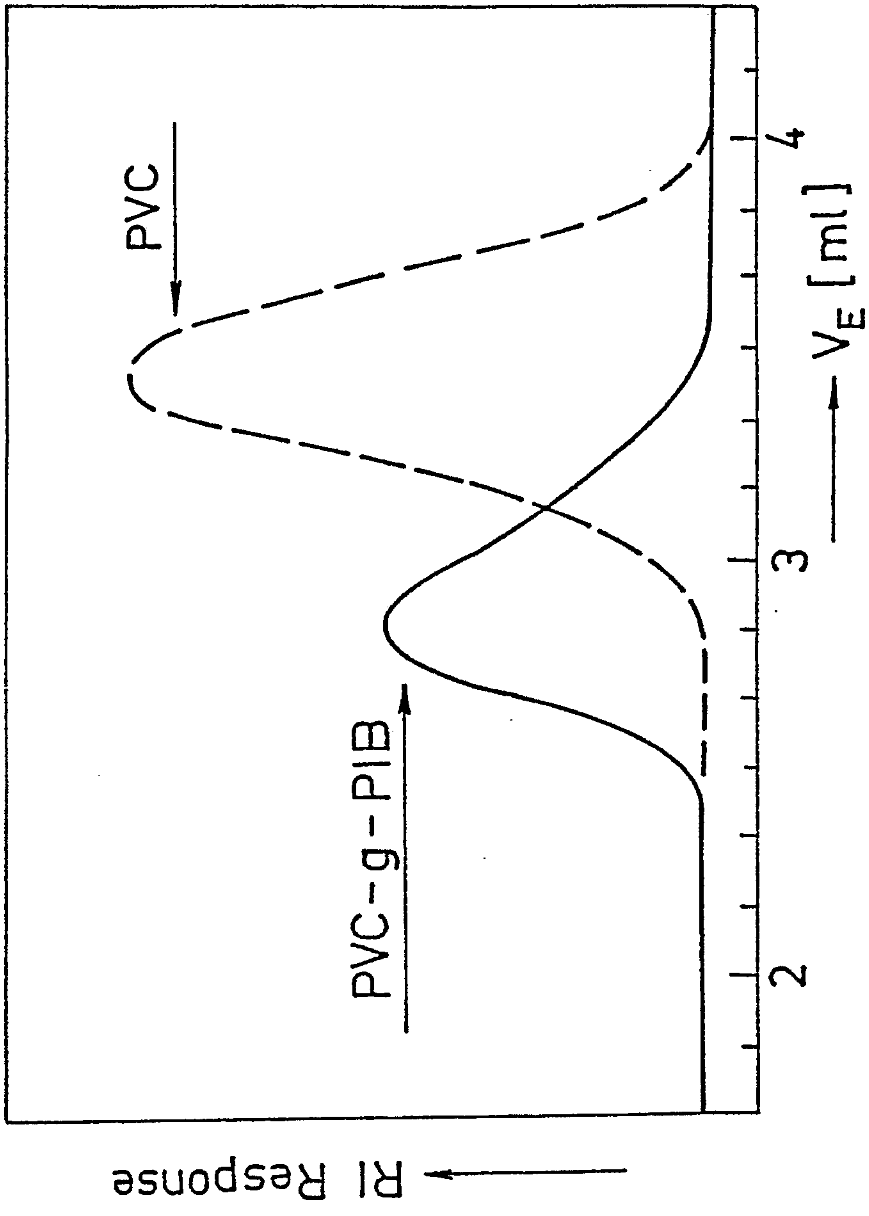


FIG. 1

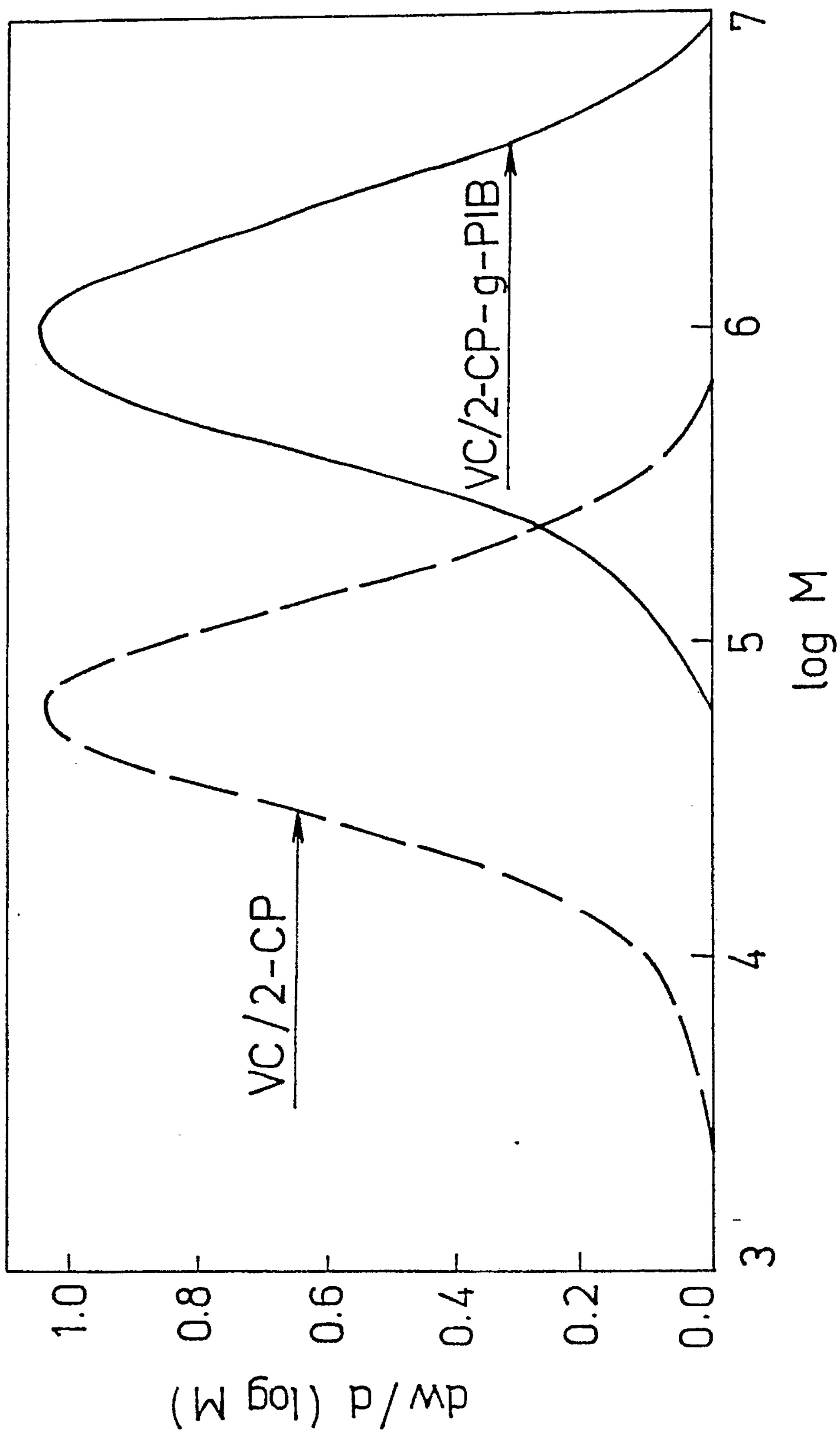


FIG. 2

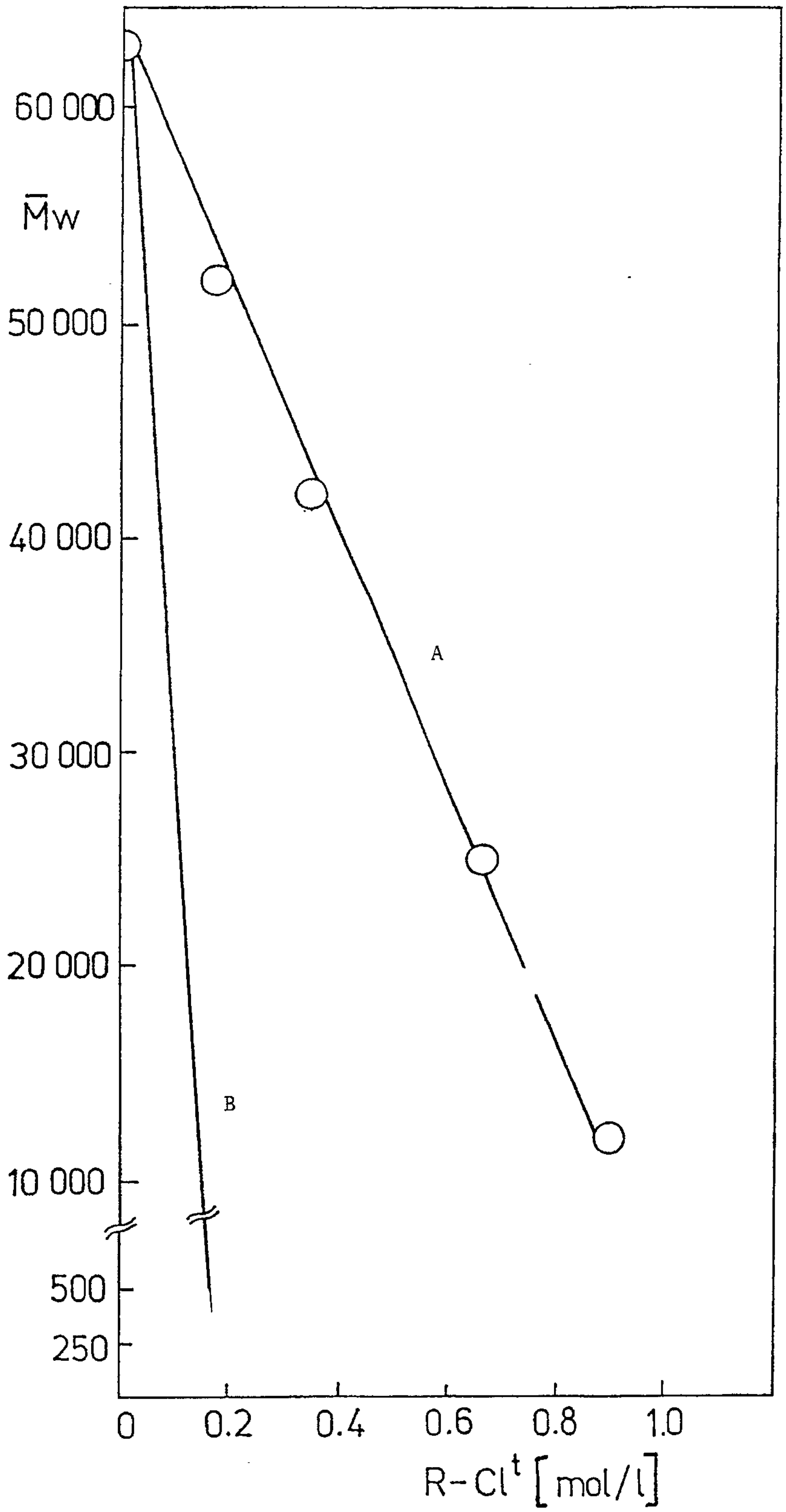
60 000
M̄w
50 000
40 000
30 000
20 000
10 000
500
250
A
B
0
0.2
0.4
0.6
0.8
1.0
R-Cl$^t$ [mol/l]

FIG. 3

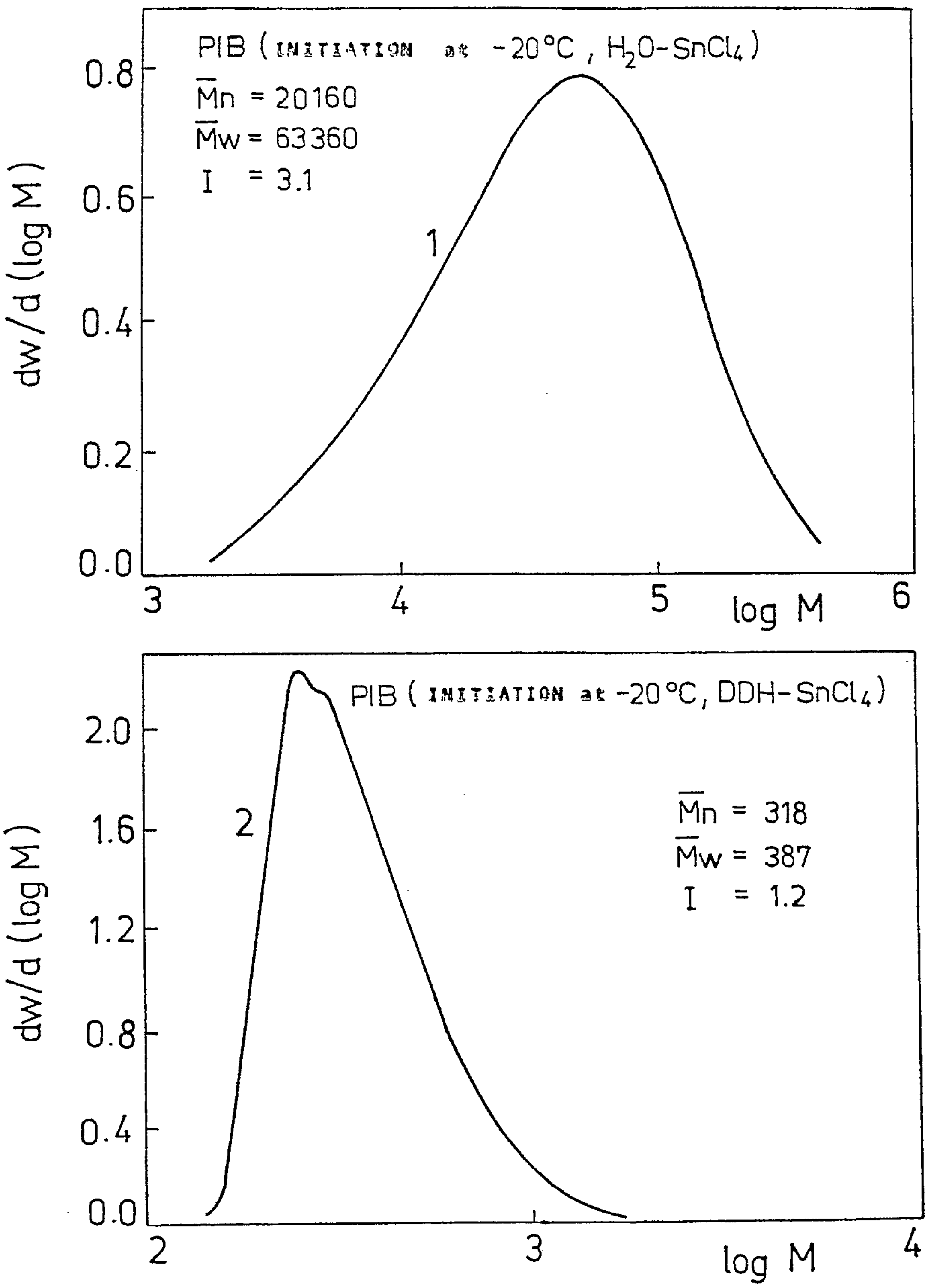
PIB (INITIATION at -20°C, H2O-SnCl4)
Mn = 20160
Mw = 63360
I = 3.1
1
dw/d (log M)
0.8
0.6
0.4
0.2
0.0
3
4
5
6
log M
PIB (INITIATION at -20°C, DDH-SnCl4)
2
Mn = 318
Mw = 387
I = 1.2
dw/d (log M)
2.0
1.6
1.2
0.8
0.4
0.0
2
3
4
log M

FIG. 4

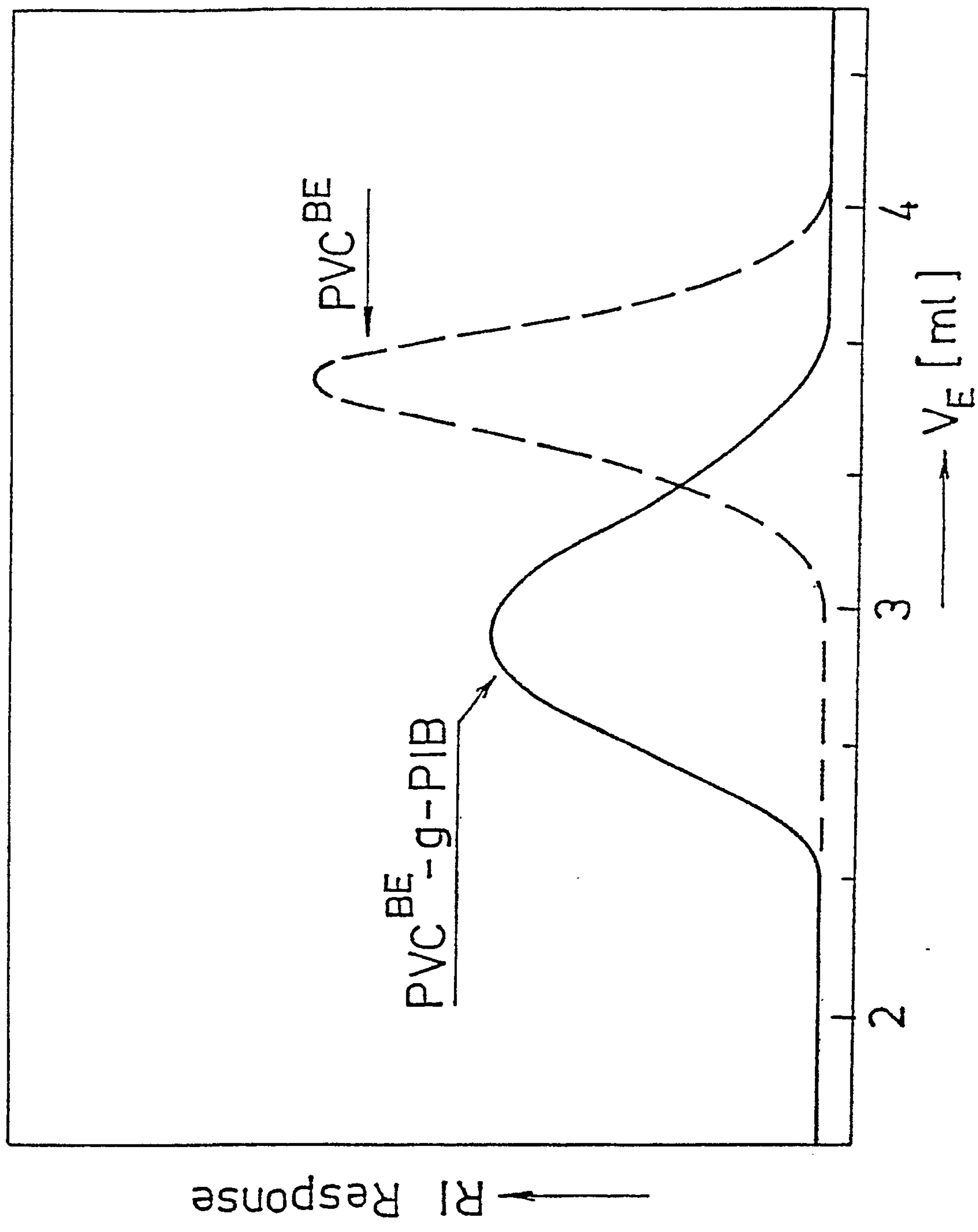


FIG. 5